# EUROPÄISCHE PATENTSCHRIFT

(11) **EP 1 769 210 B1**
(45) Veröffentlichungstag und Bekanntmachung des Hinweises auf die Patenterteilung: **24.11.2010**
(21) Anmeldenummer: 05769010.9
(22) Anmeldetag: 01.07.2005
(51) Int. Cl.: F28F 9/02

(54) **WÄRMETAUSCHER, INSBESONDERE LADELUFTKÜHLER**
HEAT EXCHANGER, ESPECIALLY FOR AN INTERCOOLER
ECHANGEUR THERMIQUE, EN PARTICULIER REFROIDISSEUR D'AIR DE SURALIMENTATION

(30) Priorität: 12.07.2004 DE 102004033784
(43) Veröffentlichungstag der Anmeldung: 04.04.2007
(73) Patentinhaber: Behr GmbH & Co. KG, 70469 Stuttgart (DE)
(72) Erfinder: FREITAG, Marius, 08960 Barcelona (ES); KÄMMLER, Georg, 70439 Stuttgart (DE)
(74) Vertreter: Mantel, Berthold Friedrich
(86) Internationale Anmeldenummer: PCT/EP2005/007092
(87) Internationale Veröffentlichungsnummer: WO 2006/005449

(56) Entgegenhaltungen:
- EP-A- 0 735 337
- EP-A- 1 273 868
- DE-U1- 20 016 331
- FR-A- 2 614 980
- FR-A- 2 742 528
- FR-A- 2 742 533

## Beschreibung

Die vorliegende Erfindung betrifft einen Wärmetauscher, insbesondere einen Ladeluftkühler für ein Kraftfahrzeug, mit einem Stabilisierungselement gemäss dem Oberbegriff des Patentanspruchs 1. FR-A-2742533 zeigt einen derartigen Wärmetauscher.

Um eine Leistungssteigerung eines Verbrennungsmotors zu erzielen, kann die der Verbrennung zuzuführende Luft beispielsweise mit einem Turbolader verdichtet werden, bevor sie den Brennkammern des Verbrennungsmotors zugeführt wird. Die Verdichtung der Luft bringt jedoch gleichzeitig eine Erwärmung derselben mit sich, die für einen optimalen Ablauf des Verbrennungsprozesses nachteilig ist. Beispielsweise kann dadurch eine verfrühte Zündung oder eine erhöhte Stickoxidemission ausgelöst werden. Um die nachteiligen Folgen von der Verbrennung zugeführter überhitzter Luft zu vermeiden, wird einem Turbolader ein als Ladeluftkühler ausgebildeter Wärmetauscher nachgeschaltet, mit dem die komprimierte Luft vor ihrer Verbrennung auf eine zulässige Temperatur abgekühlt werden kann.

Ein Ladeluftkühler gemäß dem Oberbegriff des Patentanspruchs 1 ist beispielsweise auch in der DE 197 57 034 A1 beschrieben. Bei dem dortigen Wärmetauscher wird die heiße Luft in einen ersten Sammelkanal des Wärmetauschers eingeleitet, wo sie sich verteilt und in Flachrohre einströmt, die in den Sammelkanal einmünden. Die Flachrohre sind nebeneinander, und mit den die langen Seiten ihres Querschnittes enthaltenden Seitenflächen parallel zueinander angeordnet und bilden einen Strömungsweg aus, durch den kühlende Luft geleitet wird. Im Strömungsweg sind zwischen den Flachrohren Kühlrippen angeordnet, die einen effektiven Wärmeaustausch zwischen den Flachrohren und dem kühlenden Luftstrom bewirken. Nach dem Durchqueren des kühlenden Luftstromes münden die Flachrohre in einen zweiten Sammelkanal, der die darin einströmende gekühlte, komprimierte Ladeluft der Verbrennung im Motor zuführt.

Bei derartigen Ladeluftkühlern werden die Sammelkanäle üblicherweise durch einen Rohrboden und Wände zumindest eines Kastens begrenzt, die bei Beladung mit komprimierter Luft aufgrund des hohen Druckes auseinandergedrückt werden. Die Verbindung zwischen dem Rohrboden und den Kastenwänden wird dabei sowohl bezüglich ihrer Dichtigkeit als auch bezüglich ihrer mechanischen Festigkeit stark beansprucht.

Um einem Auseinanderstreben der Kastenwände entgegenzuwirken, werden beispielsweise Zuganker verwendet, die jeweils zwei gegenüberliegende Kastenwände miteinander verbinden, wodurch der Kasten versteift wird. Um die auftretenden Zugkräfte aufzunehmen, müssen die Zuganker jedoch eine gewisse Mindeststärke aufweisen. Dadurch werden die Strömungsverhältnisse der zu kühlenden Luft und damit der durch den Ladeluftkühler hervorgerufene Druckverlust negativ beeinflußt. Bei Kunststoffkästen sind darüberhinaus oft teure und/oder empfindliche Spritzgußwerkzeuge notwendig, um Kästen mit Zugankern herstellen zu können.

Die Aufgabe der Erfindung ist es, einen Wärmetauscher bereitzustellen, bei dem eine hohe mechanische Festigkeit bei wenig erhöhtem oder gegebenenfalls verringertem Druckverlust realisierbar ist.

Diese Aufgabe wird durch einen Wärmetauscher mit den Merkmalen des Anspruchs 1 gelöst.

Gemäß Anspruch 1 weist ein erfindungsgemäßer Wärmetauscher zumindest einen Kasten mit zumindest einer Kammer zur Verteilung und/oder Sammlung eines strömenden Mediums und zumindest ein Rohrbündel aus mit der zumindest einen Kammer kommunizierend verbundenen Rohren auf. Der Kasten besteht aus einem Rohrboden mit Öffnungen, in die die Rohre des Rohrbündels einsteckbar sind, und einem Gehäusedeckel mit zumindest zwei Seitenwänden, die mit Hilfe zumindest eines Stabilisierungselementes miteinander verbunden sind. Vorteilhafterweise weist das zumindest eine Stabilisierungselement zumindest ein erstes und ein zweites Kraftübertragungselement auf, wobei ein erstes Kraftübertragungselement in eine erste Aufnahme einer Seitenwand des Gehäusedeckels aufnehmbar ist und ein zweites Kraftübertragungselement in eine zweite Aufnahme des Rohrbodens eingreift.

Ein Rohrbündel im Sinne der Erfindung wird durch nebeneinanderliegende Rohre gebildet. Die Rohre können dabei in einer Reihe oder in mehreren Reihen angeordnet sein.

Kräfte, die auf die zwei Seitenwände des Gehäusedeckels wirken, beispielsweise Druckkräfte, die die Seitenwände auseinanderdrücken, werden durch das zumindest eine erste Kraftübertragungselement zumindest teilweise auf das zumindest eine Stabilisierungselement übertragen. Kräfte, die auf das zumindest eine Stabilisierungselement wirken, werden durch das zumindest eine zweite Kraftübertragungselement auf den Rohrboden übertragen. Auf diese Weise werden Kräfte, die auf die Seitenwände wirken, teilweise von den Seitenwänden selbst, teilweise von dem Stabilisierungselement und teilweise von dem Rohrboden aufgenommen, wobei die jeweiligen Anteile der Kraftaufnahme sehr verschieden sein können.

Insbesondere durch die Kraftaufnahme des Rohrbodens wird die Kraft, die das Stabilisierungselement aufnimmt, verringert, so daß eine geringere Stärke des Stabilisierungselementes ausreicht, um den Kasten zu stabilisieren. Somit werden die Strömungsverhältnisse in der zumindest einen Kammer innerhalb des Kastens durch das Stabilisierungselement verhältnismäßig wenig beeinflußt, wodurch der Druckverlust nur wenig oder nicht erhöht wird.

Gemäß einer vorteilhaften Ausführungsform ist das zumindest eine erste Kraftübertragungselement mit dem zumindest einen zweiten Kraftübertragungselement einstückig ausgebildet, so daß eine Kraftübertragung von einer Seitenwand des Kastens auf den Rohrboden auf einfache Weise gewährleistet ist.

Gemäß einer bevorzugten Ausgestaltung weist das zumindest eine Stabilisierungselement zumindest ein Kraftaufnahmeelement auf, das zur Aufnahme einer Kraft zwischen zwei Seitenwänden eine Verbindung zwischen den zwei Seitenwänden herstellt. Um eine Strömung eines Mediums von der zumindest einen Kammer in die Rohre des Rohrbündels oder umgekehrt nicht zu behindern, ist das zumindest eine Kraftaufnahmeelement im wesentlichen zwischen zwei benachbarten Öffnungen des Rohrbodens angeordnet. Dies bedeutet, daß die Öffnungen nicht durch das Kraftaufnahmeelement verdeckt werden.

Bevorzugt ist in jedem Zwischenraum zwischen zwei Rohrbodenöffnungen ein Kraftaufnahmeelement angeordnet. Gemäß einer Ausgestaltung ist jedoch nur ein Teil der Zwischenräume mit einem Kraftaufnahmeelement versehen, beispielsweise bei Verwendung baugleicher Stabilisierungselementanordnungen für verschiedene Wärmetauscher mit unterschiedlicher Rohranzahl.

Gemäß einer bevorzugten Weiterbildung der Erfindung ist das Kraftaufnahmeelement federelastisch ausgebildet, so daß das Stabilisierungselement nur einen Teil der auf die Seitenwände wirkenden Kräfte aufnimmt. Dadurch wird gewährleistet, daß die Seitenwände selbst einen Teil der Kräfte aufnehmen, die auf sie wirken. Dadurch wird eine gleichmäßigere Verteilung der Kräfte auf die verschiedenen Bauteile erreicht, so daß insgesamt mit vergleichsweise geringen Materialstärken eine ausreichende Stabilität des Kastens erreicht wird.

Besonders bevorzugt ist das zumindest eine Kraftaufnahmeelement mit zumindest einem ersten und/oder zumindest einem zweiten Kraftübertragungselement einstückig ausgebildet. Dadurch ist das zumindest eine Stabilisierungselement mit verhältnismäßig geringem Aufwand herstellbar.

Gemäß einer vorteilhaften Ausführung eines erfindungsgemäßen Wärmetauschers weist das zumindest eine Stabilisierungselement zumindest eine Strömungsleitfläche auf. Die Strömungsleitfläche dient einer weitgehenden Vermeidung oder Verringerung von Verwirbelungen des in die Rohre oder aus den Rohren des Rohrbündels strömenden Mediums, indem Vertiefungen, wie beispielsweise Mulden, Rinnen oder Verschneidungen, verdeckt werden und Erhöhungen, wie beispielsweise Vorsprünge, Ecken oder Kanten, verdeckt oder ausgeglichen werden. Zu diesem Zweck schließt sich die zumindest eine Strömungsleitfläche wenigstens bereichsweise an zumindest eine Innen- oder Außenfläche einer Wand eines Rohres des Rohrbündels und/oder an zumindest eine Innenfläche eines Randes einer Öffnung im Rohrboden im wesentlichen an.

Ein Anschließen der Strömungsleitfläche an eine Innenfläche ist dabei insbesondere aus strömungstechnischer Sicht vorteilhaft. Ein Anschließen der Strömungsleitfläche an Außenflächen einer Rohrwand ist insbesondere dann vorteilhaft, wenn einige Rohrenden aufgrund von Fertigungstoleranzen weiter über Öffnungen im Rohrboden hinausragen könnten als andere. Die weiter hinausragenden Rohrenden stoßen dann nicht an die Strömungsleitflächen an. Gemäß einer weiteren Ausführungsform sind die Rohrenden aufgeweitet und gegebenenfalls mit den Außenflächen ihrer Wände an die Strömungsleitflächen angelegt.

Besonders bevorzugt ist die zumindest eine Strömungsleitfläche zu der Innen- oder Außenfläche einer Rohrwand beziehungsweise zu der Innenfläche eines Öffnungsrandes hin gekrümmt. Hierdurch wird ein durch das Stabilisierungselement erzeugter Strömungswiderstand unter Umständen weiter verringert.

Gemäß einer vorteilhaften Ausgestaltung ist das Stabilisierungselement drehsymmetrisch ausgebildet, wobei die bevorzugt zweizählige Symmetrieachse besonders bevorzugt parallel zu einer Rohrlängsachse des Rohrbündels orientiert ist. Hierdurch resultiert eine erhöhte Fertigungssicherheit, weil während einer Montage des Wärmetauschers eine richtige Anordnung, insbesondere ein Einlegen, des Stabilisierungselements erleichtert wird, da dieses nach einer Verdrehung um 180° ebenfalls in einer gewünschten Orientierung angeordnet ist.

Gemäß einer bevorzugten Ausführung weist der Wärmetauscher zwei Stabilisierungselemente auf, die über zumindest ein Verbindungselement miteinander verbunden sind. Hierdurch wird eine gemeinsame und damit vereinfachte Montage mehrerer Stabilisierungselemente ermöglicht. Besonders vorteilhaft sind alle Stabilisierungselemente zu einem Rahmen miteinander verbunden, so daß nur ein einziges zusätzliches Teil zu montieren ist.

Bevorzugt ist das Verbindungselement im Bereich einer Seitenwand des Gehäusedeckels und damit nicht über einer Öffnung des Rohrbodens angeordnet. Dies bedeutet, daß die Öffnungen des Rohrbodens nicht durch das Verbindungselement verdeckt werden.

Bevorzugt ist das Verbindungselement durch sein Material und/oder seine Form federelastisch ausgebildet. Dadurch wird ein Ausgleich von Fertigunstoleranzen beim Abstand zwischen zwei Stabilisierungselementen ermöglicht. Darüberhinaus ist ein verformbares Verbindungselement vorteilhaft, weil dadurch eine Lagerung oder ein Transport mehrerer Stabilisierungelemente vereinfacht wird, die dann beispielsweise auf Rollen oder dergleichen transportierbar sind.

Bevorzugt ist das zumindest eine Verbindungselement mit zumindest einem benachbarten Stabilisierungselement einstückig ausgebildet. Besonders bevorzugt sind alle Stabilisierungs- und Verbindungselemente miteinander einstückig ausgebildet, wodurch sich eine vereinfachte und damit kostengünstige Herstellbarkeit ergibt.

Bevorzugt weist das Verbindungselement wesentlich kleinere Abmessungen als das Stabilisierungselement auf. Dies dient unter Umständen einer besseren Verformbarkeit des Verbindungselementes und/oder einer erleichterten Montage der Stabilisierungselemente.

Gemäß einer vorteilhaften Ausgestaltung weist der Gehäusedeckel zumindest eine Verstärkungsrippe auf. Die Verstärkungsrippe dient einer verbesserten Kraftaufnahme und damit einer Stabilisierung des Gehäusedeckels. Durch eine Anordnung einer ersten Aufnahme für ein erstes Kraftübertragungselement im Bereich der Verstärkungsrippe wird ein günstiges Zusammenwirken des Stabilisierungselementes mit der Verstärkungsrippe erreicht, indem Kräfte, die nicht durch das Stabilisierungselement aufgenommen werden, über die Verstärkungsrippe ableitbar sind. Unter Umständen sind durch eine solche Anordnung lokale Materialanhäufungen im Gehäusedeckel vermeidbar oder zumindest reduzierbar.

Für eine zusätzliche Stabilisierung ist ein Wandfuß des Gehäusedeckels mit großen Abmessungen vorteilhaft. Als günstig erweist sich ein Wandfuß mit einer Dicke M > 4 mm und/oder einer Höhe L > 4 mm.

Eine weitere Aufgabe der Erfindung ergibt sich unter Umständen dadurch, daß ein Gehäusedeckel aus Kunststoff insbesondere nach einer Fertigung durch ein Spritzgußverfahren häufig mit einem Spannrahmen versehen werden muß. Dadurch soll einem Verzug der Kastenform insbesondere im Bereich deren Wandfußes vorgebeugt werden. Der Spannrahmen muß jedoch vor einer Montage des Kastens wieder entnommen werden.

Die Aufgabe, den Verzug des Gehäusedeckels auf einfachere Weise zu reduzieren, wird insbesondere bei einem Wärmetauscher nach dem Oberbegriff des Anspruchs 1 durch ein Stabilisierungselement gelöst, das Verzugspannungskräfte, also üblicherweise Druckkräfte, aufnimmt und im Kasten verbleibt. Das Stabilisierungselement übernimmt dann die Rolle eines verlorenen Spannrahmens. Dies bedeutet, daß das Stabilisierungselement unter Umständen während einer Fertigung des Wärmetauschers Druckkräfte und während eines Betriebes des Wärmetauschers Zugkräfte aufnimmt. Desweiteren wird der Gehäusedeckel während einer Montage auf dem Rohrboden stabilisiert, so daß während dieses Herstellungsschrittes die Fertigungssicherheit erhöhbar ist.

Die Erfindung wird nachfolgend anhand von Ausführungsbeispielen unter Bezugnahme auf die Zeichnungen näher erläutert. Es zeigen:
- Fig. 1: einen Gehäusedeckel eines Kastens eines Wärmetauschers,
- Fig. 2: Stabilisieruhgselemente eines Wärmetauscherkastens,
- Fig. 3: einen Gehäusedeckel mit montierten Stabilisierungselementen,
- Fig. 4: einen Wärmetauscher gemäß der vorliegenden Erfindung,
- Fig. 5: einen Längsschnitt eines Wärmetauscherausschnitts,
- Fig. 6: einen Querschnitt eines Wärmetauscherausschnitts und
- Fig. 7: einen Querschnitt eines Gehäusedeckels.

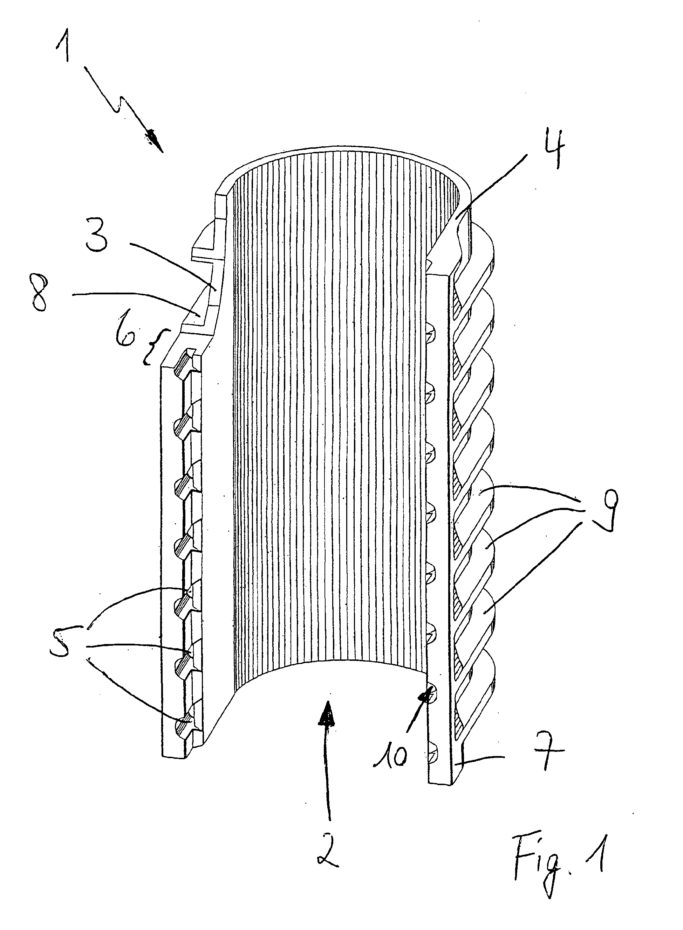

In Fig. 1 ist ein Gehäusedeckel 1 eines Kastens eines Wärmetauschers gemäß der vorliegenden Erfindung dargestellt. Der Gehäusedeckel 1 umschließt zusammen mit einem nicht gezeigten Rohrboden eine Kammer 2, die beispielsweise für eine Sammlung oder für eine Verteilung eines strömenden Mediums vorgesehen ist. Der Gehäusedeckel weist auf seinen Längsseiten Seitenwände 3, 4 sowie auf seinen Stirnseiten nicht gezeigte Stirnwände auf. In Randbereichen 6, 7 der Seitenwände 3, 4 befinden sich erste Aufnahmen 5, 10, die geeignet sind, nicht dargestellte Kraftübertragungselemente formschlüssig aufzunehmen. Der Gehäusedeckel 1 wird durch Verstärkungsrippen 8, 9 in seiner Form stabilisiert, in deren Bereich jeweils die ersten Aufnahmen 5 angeordnet sind.

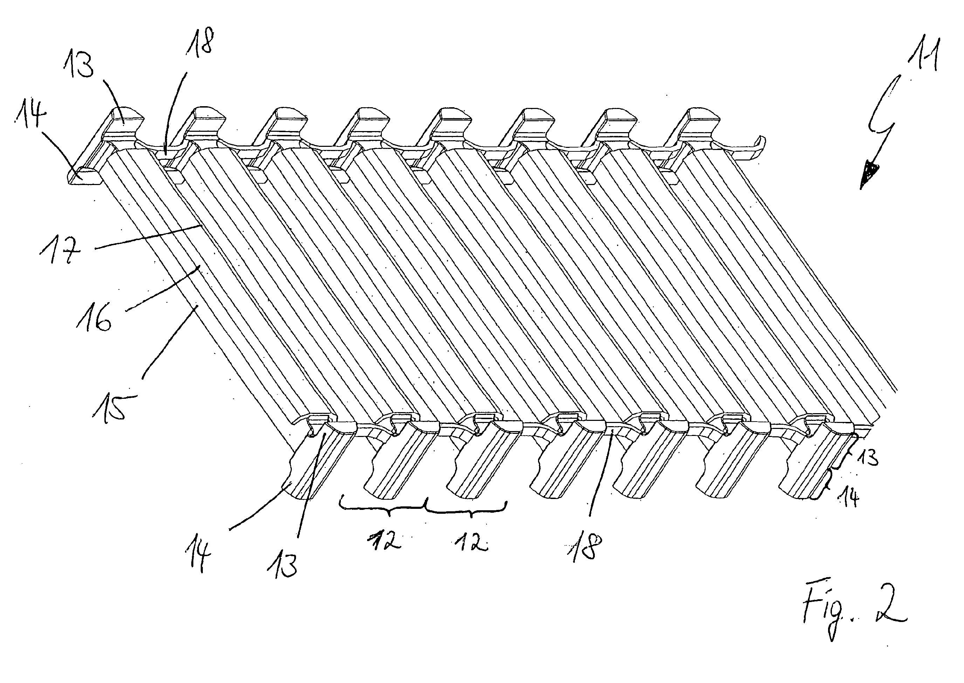

Fig. 2 zeigt einen Spannrahmen 11 mit Stabilisierungselementen 12 für einen nicht näher dargestellten Wärmetauscherkasten. Jedes Stabilisierungselement 12 weist zwei erste Kraftübertragungselemente 13 auf, die geeignet sind, in ersten Aufnahmen eines nicht gezeigten Gehäusedeckels formschlüssig aufgenommen zu werden. Außerdem weist jedes Stabilisierungselement zwei zweite Kraftübertragungselemente 14 auf, die für ein Eingreifen in zweite Aufnahmen eines ebenfalls nicht gezeigten Rohrbodens vorgesehen sind. Jedes erste Kraftübertragungselement 13 ist mit einem zweiten Kraftübertragungselement 14 einstückig ausgebildet. Jeweils zwei solcher einstückiger Paare von Kraftübertragungselementen 13, 14 sind über ein ebenso einstückig ausgebildetes Kraftaufnahmeelement 15 miteinander verbunden, das geeignet ist, Zug- und/oder Druckkräfte insbesondere entlang seiner Längsrichtung aufzunehmen. Der doppel-T-förmige Querschnitt der Stabilisierungselemente dient also gleichzeitig einer Kraftübertragung über Kraftübertragungselemente 13, 14, die die Abschlußbalken der Doppel-T-Form bilden, und einer Kraftaufnahme durch Kraftaufnahmeelemente 15, die das Mittelteil der Doppel-T-Form bilden.

Aufgrund seines Materials, beispielsweise Kunststoff, ist das Kraftaufnahmeelement 15 federelastisch ausgebildet, damit Zug- und/oder Druckkräfte nur teilweise aufgenommen werden, wodurch eine teilweise Entlastung des Spannrahmens 11 bewirkt wird. Die Stabilisierungselemente 12 weisen desweiteren Strömungsleitflächen 16, 17 auf, die wiederum einstückig mit den Kraftaufnahmeelementen 15 ausgebildet sind. Die Funktion der Strömungsleitflächen 16, 17 wird weiter unten erläutert.

Die Stabilisierungselemente 12 sind jeweils paarweise über Verbindungselemente 18 einstückig miteinander verbunden, die hier als schmale Stege ausgestaltet sind. Die Verbindungselemente 18 sind derart verformbar ausgebildet, daß der gesamte Spannrahmen 11 aufrollbar und damit leicht transportierbar ist. Insbesondere sind durch einfaches Durchtrennen zweier gegenüberliegender Verbindungselemente 18 beliebig große Spannrahmen einer Endlosrolle entnehmbar. Durch ihre gebogene Form sind die Verbindungselemente 18 in ihrer Längsrichtung federelastisch ausgebildet, so daß der Abstand zwischen jeweils zwei Stabilisierungselementen 12 bei einer Montage an den Abstand zwischen jeweils zwei Aufnahmen in dem nicht gezeigten Gehäusedeckel anpaßbar ist.

Aufgrund der zweizähligen Drehsymmetrie der Stabilisierungselemente 12 und des gesamten Spannrahmens 11 wird der Spannrahmen 11 durch eine Verdrehung um 180° auf sich selbst abgebildet und ist unabhängig von einer solchen Verdrehung funktionsfähig, so daß sich eine erhöhte Fertigungssicherheit ergibt.

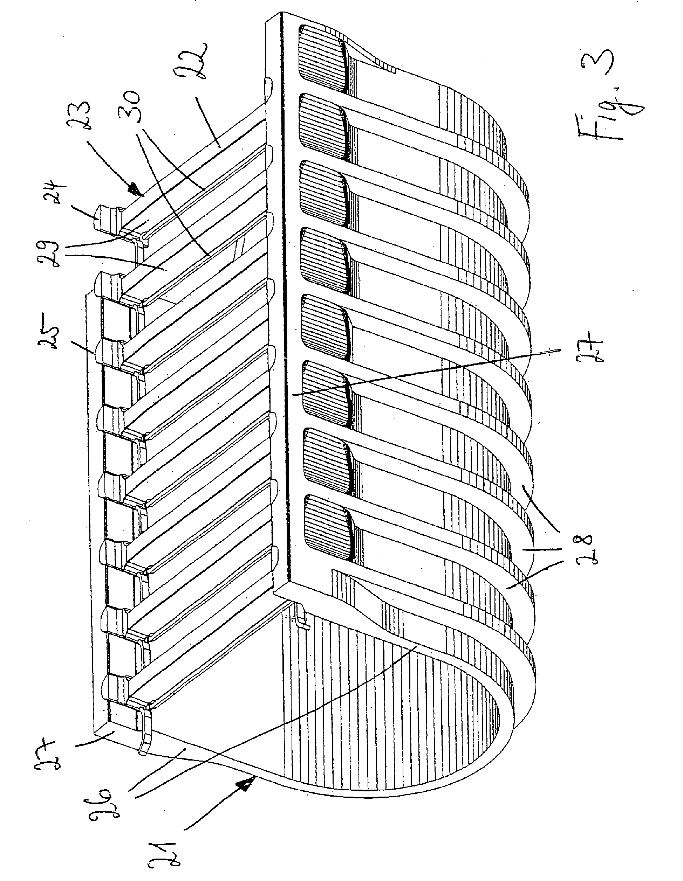

Fig. 3 zeigt einen Gehäusedeckel 21 mit einem aus Stabilisierungselementen 22 bestehenden Spannrahmen 23. Die Stabilisierungselemente 22 weisen wie die Stabilisierungselemente 12 aus Fig. 2 erste Kraftübertragungselemente auf, die in erste Aufnahmen des Gehäusedeckels 21 aufgenommen und deshalb in Fig. 3 nicht sichtbar sind. Zweite Kraftübertragungselemente 24 sind in Aussparungen 25 des Gehäusedeckels 21 aufgenommen, wobei die Aussparungen 25 als Verlängerung zu den ersten Aufnahmen ausgebildet sind. Die Randbereiche der Seitenwände 26 des Gehäusedekkels 21 werden also durch die Kraftübertragungselemente der Stabilisierungselemente 23 zu vollen Wandfüßen 27 ergänzt.

Der Gehäusedeckel 21 und/oder der Spannrahmen 23 bestehen vorzugsweise aus Kunststoff, insbesondere aus PPS. Der Spannrahmen 23 wird bevorzugt bereits kurz nach einer Entformung des Gehäusedeckels 21, insbesondere aus einem Spritzgußwerkzeug, in diesen eingelegt, so daß ein Formverzug des Gehäusedeckels 21 während dessen Abkühlung unterdrückt wird. Gleichzeitig wird unter Umständen der Spannrahmen 23, der dann als verlorener Spannrahmen fungiert, durch auftretende Verzugskräfte verspannt oder fixiert und ist an einem Herausfallen gehindert. Hieraus folgt neben einer Vereinfachung der Montage auch eine Erhöhung der Fertigungssicherheit.

Im übrigen sind der Gehäusedeckel 21 und der Spannrahmen 23 ähnlich wie der Gehäusedeckel 1 aus Fig. 1 beziehungsweise der Spannrahmen 11 aus Fig. 2 aufgebaut. Insbesondere sind Verstärkungsrippen 28 sowie Kraftaufnahmeelemente 29 mit Strömungsleitflächenn 30 in Fig. 3 zu sehen.

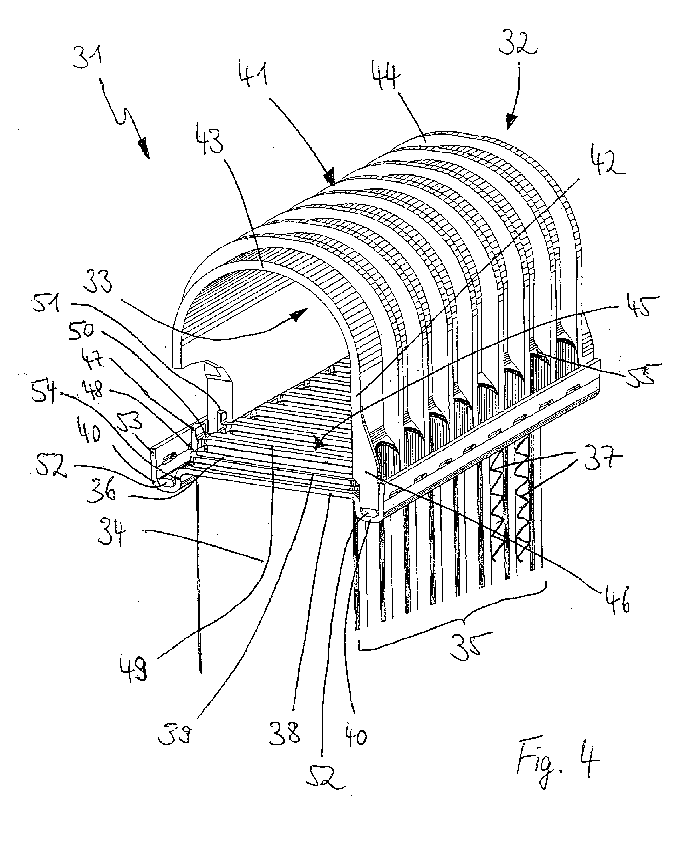

Fig. 4 zeigt einen Wärmetauscher 31 gemäß der vorliegenden Erfindung, der beispielsweise als Ladeluftkühler für ein Kraftfahrzeug verwendbar ist. Der Wärmetauscher 31 umfaßt einen Kasten 32 mit einer Kammer 33 zur Verteilung eines strömenden Mediums, beispielsweise Ladeluft, auf Rohre 34 eines Rohrbündels 35 oder zur Sammlung eines strömenden Mediums aus den Rohren 34. Die Rohre 34 kommunizieren zu diesem Zweck über ihre offene Rohrenden 36 mit der Kammer 33. Für eine Zu- beziehungsweise Abfuhr des strömenden Mediums weist der Kasten 32 vorzugsweise einen nicht dargestellten Anschlußstutzen auf, an den eine Leitung, beispielsweise ein Rohr oder ein Schlauch, anschließbar ist. Das Rohrbündel 35 umfaßt ferner Wellrippen 37 zur Vergrößerung einer Wärmeübertragungsfläche, die zwischen den Rohren 34 angeordnet, vorzugsweise mit den Rohren 34 stoffschlüssig verbunden, insbesondere verlötet, und von einem weiteren Medium, beispielsweise Kühlluft, beströmbar sind, so daß das die Rohre durchströmende Medium und das die Rohre umströmende Medium Wärme austauschen können.

Der Kasten 32 umfaßt einen Rohrboden 38, der in einem flachen Zentralbereich Öffnungen 39, in die die Rohrenden 36 eingesteckt sind, und in einem Umfangsbereich eine umlaufende, als Sicke 40 ausgebildete zweite Aufnahme 40 aufweist. Außerdem umfaßt der Kasten 32 einen Gehäusedeckel 41 mit Seitenwänden 42 und einer Deckwand 43, die mit durchgehenden Verstärkungsrippen 44 versehen sind, sowie mit Stabilisierungselementen 45, die die Seitenwände 42 in deren als Wandfüße 46 ausgebildeten Randbereichen miteinander verbinden. Für eine abgedichtete Verbindung zwischen Rohrboden 38 und Gehäusedeckel 41 sind die Wandfüße 46 zusammen mit einer Dichtung 52, die vorzugsweise ebenfalls umlaufend einstückig ausgebildet und aus einem elastischen Material, wie beispielsweise Gummi, hergestellt ist, in der Sicke 40 aufgenommen. Für ein Fixieren und Zusammendrücken der Dichtung 52 ist dazu der äußerste Rand 53 des Rohrbodens nach innen umformbar und gegen die Wandfüße 46 preßbar. Der Rohrboden 38 besteht vorzugsweise aus einem Metall oder einer Legierung, insbesondere aus Aluminium oder einer Aluminiumlegierung, und weist beispielsweise eine Dicke zwischen 1,5 mm und 2,5 mm auf.

Die Stabilisierungselemente 45 weisen erste Kraftübertragungselemente 47, nur ansatzweise sichtbare zweite Kraftübertragungselemente 48 und von Strömungsleitflächen 49 weitgehend verdeckte Kraftaufnahmeelemente 50 auf. Die ersten Kraftübertragungselemente 47 sind dabei in als Taschen 51 ausgebildete erste Aufnahmen, die in den Seitenwänden 42 vorgesehen sind, aufgenommen, wohingegen die zweiten Kraftübertragungselemente 48 in die Sicke 40 eingreifen. Verformungskräfte, die aufgrund eines Überdrucks des in der Kammer 33 strömenden Mediums in den Seitenwänden des Gehäusedeckels auftreten, werden zumindest teilweise über die ersten Aufnahmen 51, die ersten Kraftübertragungselemente 47, die zweiten Kraftübertragungselemente 48 und eine Innenseite 54 der Sicke 40 in den Rohrboden 38 eingeleitet und in Form von Druckkräften von dessen flachem Zentralbereich aufgenommen. Das Material der Kraftübertragungselemente 47, 48 besitzt vorzugsweise eine höhere Steifigkeit als das Material der Seitenwände 42 beziehungsweise des Gehäusedeckels 41, so daß unter Umständen die Kraftübertragung verbessert wird. Ein Teil der Kräfte wird in Form von Zugkräften von den Kraftaufnahmeelementen 50 der Stabilisierungselemente 45 aufgenommen, die damit auch eine Zugankerfunktion ausüben.

Die Verstärkungsrippen 44, die vorzugsweise auf einer Außenseite des Gehäusedeckels 41 angebracht und insbesondere einstückig mit dem Gehäusedeckel 41 ausgebildet sind, weisen im Bereich der ersten Aufnahmen 51 ein aufgeweitetes Profil 55 auf. Hierdurch wird bei Berücksichtigung der taschenförmigen Aussparungen, die durch die ersten Aufnahmen 51 gegeben sind, unter Umständen eine vergleichmäßigte Materialstärke des Gehäusedeckels erreicht. Unerwünschte große Materialanhäufungen werden also vermieden.

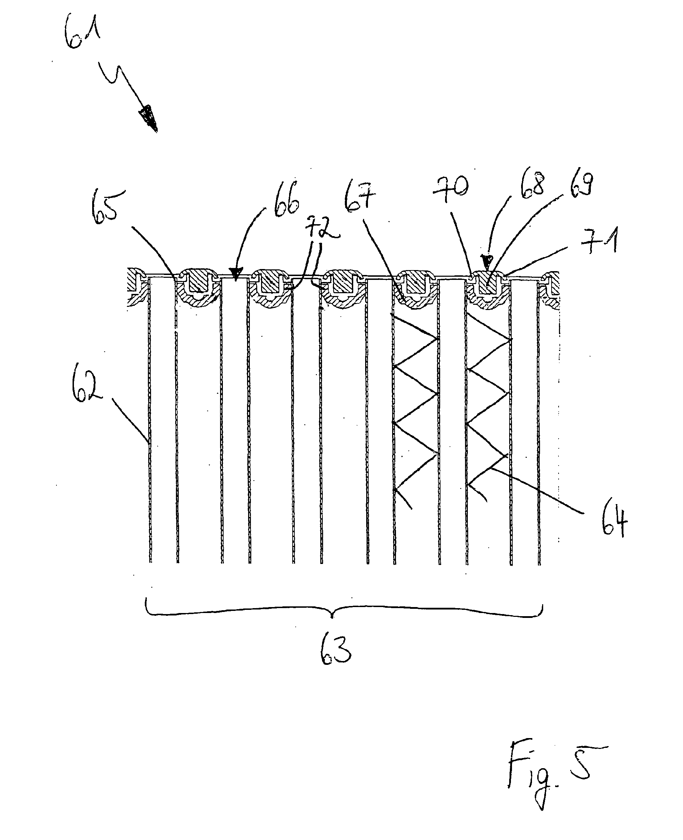

Fig. 5 zeigt einen Ausschnitt eines Wärmetauschers 61 in einem Längsschnitt. Flachrohre 62 sind zur Bildung eines Rohrbündels 63 abwechselnd mit Wellrippen 64 in einer Reihe angeordnet. Die Flachrohre 62 sind dabei als Einkammer- oder als Mehrkammerrohre ausgebildet. Rohrenden 65 der Flachrohre 62 sind in Öffnungen 66 eines Rohrbodens 67 gesteckt, der Teil eines nicht weiter dargestellten Kastens ist. Stabilisierungselemente 68 mit Kraftaufnahmeelementen 69 und Strömungsleitflächen 70, 71 sind zwischen jeweils zwei Öffnungen 66 angeordnet, ohne die Öffnungen dabei zu verdecken.

Insbesondere zwischen Einfassungen 72 jeweils zweier Öffnungen 66 weist der Rohrboden Vertiefungen auf, die durch die Strömungsleitflächen 70, 71 verdeckt werden. Die Strömungsleitflächen 70, 71 schließen dabei vorteilhaft an die Rohre 62 an und sind zu deren Wänden hin gekrümmt. Hierdurch wird ein Strömungswiderstand für ein in die Rohre 62 einströmendes oder aus den Rohren 62 ausströmendes Medium verringert, so daß auch ein über den gesamten Wärmetauscher 61 anfallender Druckverlust reduziert ist. Ein Anstoßen der Strömungsleitflächen 70, 71 an die Rohrenden 65 von überlangen Rohren, die aufgrund von Fertigungstoleranzen möglich sind, wird dadurch vermieden, daß sich die Strömungsleitflächen 70, 71 an Außenflächen der Wände der Rohre 62 anschließen. Rohrenden überlanger Rohre erstrekken sich dann unter Umständen bis zwischen die Strömungsleitflächen zweier benachbarter Stabilisierungselemente.

Bei dem in Fig. 5 dargestellten Wärmetauscher 61 sind die Strömungsleitflächen 70, 71 bezüglich des jeweiligen Stabilisierungselementes 68 im wesentlichen gleich ausgebildet und spiegelsymmetrisch zueinander angeordnet. Mögliche Vorteile der damit verbunden zweizähligen Symmetrie liegen beispielsweise in der verbesserten Fertigungssicherheit. Bei einem nicht dargestellten Ausführungsbeispiel unterscheidet sich eine erste Strömungsleitfläche (70) eines Stabilisierungselementes von einer zweiten Strömungsleitfläche (71) in ihrer Geometrie, beispielsweise in ihrem Krümmungsradius. Insbesondere im Falle einer gerichteten Strömung von einem Eintrittsstutzen zu den Öffnungen im Rohrboden oder von den Öffnungen zu einem Austrittsstutzen ist beim Eintritt in beziehungsweise Austritt aus den Rohren eine Strömungsumlenkung des Mediums zu berücksichtigen. Für eine verbesserte Druckverlustreduktion ist dann eine asymmetrische Ausgestaltung oder Anordnung der Strömungsleitflächen vorteilhaft.

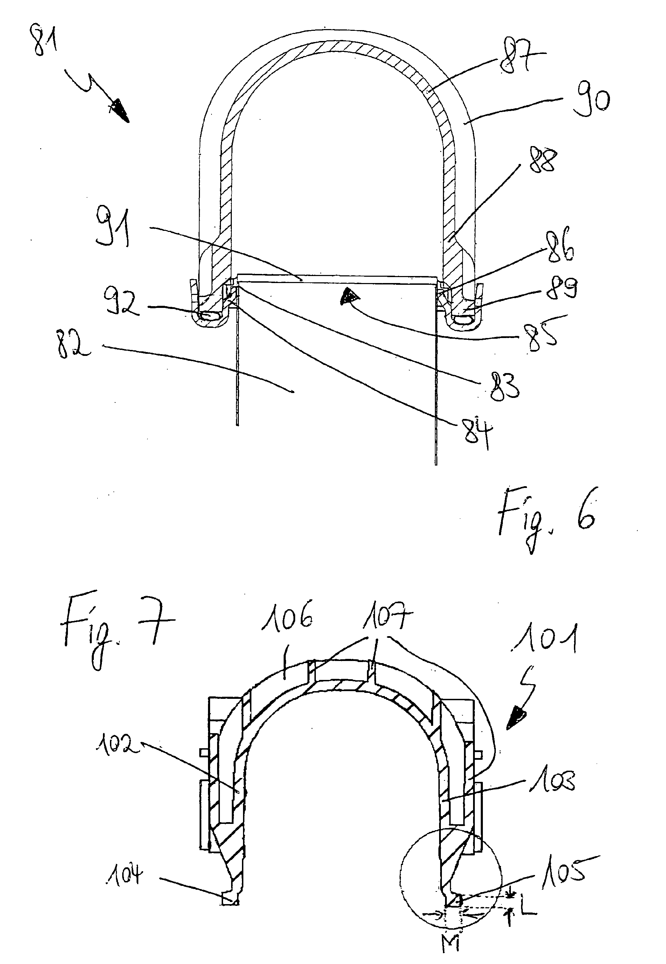

Fig. 6 zeigt einen ausschnittsweisen Querschnitt eines erfindungsgemäßen Wärmetauschers 81, umfassend ein Rohr 82 mit einem Rohrende 83, einen Rohrboden 84 mit einer Öffnung 85, die von einer Einfassung 86 begrenzt wird, einen Gehäusedeckel 87 mit Seitenwänden 88, Wandfüßen 89 und Verstärkungsrippen 90, eine Dichtung 92 sowie ein Stabilisierungselement 91.

Fig. 7 zeigt einen Querschnitt einer Variante eines Gehäusedeckels 101, umfassend zwei gegenüberliegende Seitenwände 102, 103 mit Wandfüßen 104, 105, Verstärkungsquerrippen 106 und Verstärkungslängsrippen 107. Die Verstärkungsquerrippen 106 dienen einer Versteifung des Gehäusedekkels 101 gegen ein Aufblasen durch Innenüberdruck, wohingegen die Verstärkungslängsrippen 107 eine Versteifung des Gehäusedeckels 101 in dessen Längsrichtung bewirken. Eine Dicke M und eine Höhe L der Wandfüße 104, 105 beträgt vorteilhafterweise jeweils mehr als 4 mm.

## Patentansprüche

1. Wärmetauscher, insbesondere Ladeluftkühler für ein Kraftfahrzeug, mit zumindest einem Kasten (32) der zumindest eine Kammer (2) zur Verteilung und/oder Sammlung eines strömenden Mediums aufweist, und zumindest einem Rohrbündel (35), welches aus Rohren (34) besteht, die mit der zumindest einen Kammer (2) kommunizierend verbunden sind, wobei der zumindest eine Kasten (1) einen Rohrboden (38) mit Öffnungen (39) in die die Rohre (34) des Rohrbündels (35) einsteckbar sind, einen Gehäusedeckel (1) mit zumindest zwei Seitenwänden (3,4) und zumindest ein die zumindest zwei Seitenwände verbindendes Stabilisierungselement (12) aufweist,
**dadurch gekennzeichnet, daß**
zumindest eine Seitenwand zumindest eine erste Aufnahme (5,10) aufweist und das zumindest eine Stabilisierungselement (12) zumindest ein erstes Kraftübertragungselement (13) aufweist, das in die zumindest eine erste Aufnahme (5,10) der zumindest einen Seitenwand formschlüssig aufnehmbar ist,
und der Rohrboden (38) des zumindest einen Kastens (32) zumindest eine zweite Aufnahme aufweist und das zumindest eine Stabilisierungselement (12) zumindest ein zweites Kraftübertragungselement (14) aufweist, das in die zumindest eine zweite Aufnahme eingreift.

2. Wärmetauscher nach Anspruch 1, **dadurch gekennzeichnet, daß** das zumindest eine erste Kraftübertragungselement (13) mit dem zumindest einen zweiten Kraftübertragungselement (14) einstückig ausgebildet ist.

3. Wärmetauscher nach Anspruch 1 oder 2, **dadurch gekennzeichnet, daß** das zumindest eine Stabilisierungselement (12) zumindest ein Kraftaufnahmeelement aufweist, das im wesentlichen zwischen zwei benachbarten Öffnungen des Rohrbodens angeordnet ist.

4. Wärmetauscher nach Anspruch 3, **dadurch gekennzeichnet, daß** das Kraftaufnahmeelement (15) federelastisch ausgebildet ist.

5. Wärmetauscher nach Anspruch 3 oder 4, **dadurch gekennzeichnet, daß** das zumindest eine Kraftaufnahmeelement (15) mit zumindest einem ersten und/oder zumindest einem zweiten Kraftübertragungselement einstückig ausgebildet ist.

6. Wärmetauscher nach einem der Ansprüche 1 bis 5, **dadurch gekennzeichnet, daß** das zumindest eine Stabilisierungselement (12) zumindest eine Strömungsleitfläche aufweist, die sich wenigstens bereichsweise an zumindest eine Innen- oder Außenfläche einer Wand eines Rohres des Rohrbündels und/oder an zumindest eine Innenfläche eines Randes einer Öffnung im Rohrboden im wesentlichen anschließt.

7. Wärmetauscher nach Anspruch 6, **dadurch gekennzeichnet, daß** die zumindest eine Strömungsleitfläche zumindest im Bereich eines Randes zu der zumindest einen Innen- oder Außenfläche einer Rohrwand und/oder zu der zumindest einen Innenfläche eines Öffnungsrandes hin gekrümmt ist.

8. Wärmetauscher nach einem der Ansprüche 1 bis 7, **dadurch gekennzeichnet, daß** das zumindest eine Stabilisierungselement (12) bezüglich seiner wesentlichen Bestandteile eine zweizählige Drehsymmetrieachse aufweist, wobei die Drehsymmetrieachse parallel zu einer Längsachse eines Rohres des Rohrbündels ist.

9. Wärmetauscher nach einem der Ansprüche 1 bis 8, **dadurch gekennzeichnet, daß** zumindest ein Stabilisierungselement (12) mit zumindest einem benachbarten Stabilisierungselement über zumindest ein Verbindungselement verbunden ist.

10. Wärmetauscher nach Anspruch 9, **dadurch gekennzeichnet, daß** das zumindest eine Verbindungselement (18) im Bereich einer Seitenwand des Gehäusedeckels angeordnet ist.

11. Wärmetauscher nach Anspruch 9 oder 10, **dadurch gekennzeichnet, daß** das zumindest eine Verbindungselement (18) in zumindest einer Ausdehnungsrichtung durch sein Material und/oder seine Form federelastisch ausgebildet ist.

12. Wärmetauscher nach einem der Ansprüche 9 bis 11, **dadurch gekennzeichnet, daß** das zumindest eine Verbindungselement (18) mit zumindest einem Stabilisierungselement einstückig ausgebildet ist.

13. Wärmetauscher nach einem der Ansprüche 9 bis 12, **dadurch gekennzeichnet, daß** das Verbindungselement (18) wesentlich kleinere Abmessungen als das Stabilisierungselement aufweist.

14. Wärmetauscher nach einem der Ansprüche 1 bis 13, **dadurch gekennzeichnet, daß** der Gehäusedeckel zumindest im Bereich einer Seitenwand zumindest eine Verstärkungsrippe (9) aufweist, wobei zumindest eine erste Aufnahme im Bereich der zumindest einen Verstärkungsrippe angeordnet ist.

15. Wärmetauscher nach einem der Ansprüche 1 bis 14, **dadurch gekennzeichnet, daß** zumindest eine Seitenwand des Gehäusedeckels in einem dem Rohrboden zugewandten Randbereich, wie Wandfuß, eine Dicke M mit M > 4 mm aufweist.

16. Wärmetauscher nach einem der Ansprüche 1 bis 15, **dadurch gekennzeichnet, daß** ein Wandfuß zumindest einer Seitenwand des Gehäusedeckels eine Höhe L mit L > 4 mm aufweist.

## Claims

1. A heat exchanger, in particular for an intercooler for a motor vehicle, comprising at least one tank (32) that includes at least one chamber (2) for distributing and/or collecting a flowing medium, and at least one tube bundle (35) composed of tubes (34) that are connected to the at least one chamber (2) in a communicating manner, wherein the at least one tank (1) includes a tube base (38) having openings (39) into which the tubes (34) of the tube bundle (35) can be inserted, a housing cover (1) having at least two side walls (3, 4), and at least one stabilizing element (12) that connects the at least two side walls,
**characterized in that**
at least one side wall includes at least one first receptacle (5, 10), and the at least one stabilizing element (12) includes at least one first force-transmission element (13) that can be accommodated, in a form-fit manner, in the at least one first receptacle (5, 10) of the at least one side wall,
and the tube base (38) of the at least one tank (32) includes at least one second receptacle, and the at least one stabilizing element (12) includes at least one second force-transmission element (14) that engages in the at least one second receptacle.

2. The heat exchanger according to claim 1, **characterized in that** the at least one first force-transmission element (13) is formed as a single piece with the at least one second force-transmission element (14).

3. The heat exchanger according to claim 1 or 2, **characterized in that** the at least one stabilizing element (12) includes at least one force-receiving element that is disposed substantially between two adjacent openings in the tube base.

4. The heat exchanger according to claim 3, **characterized in that** the force-receiving element (15) is resilient.

5. The heat exchanger according to claim 3 or 4, **characterized in that** the at least one force-receiving element (15) is formed as a single piece with at least one first and/or at least one second force-transmission element.

6. The heat exchanger according to one of the claims 1 through 5, **characterized in that** the at least one stabilizing element (12) has at least one flow guide surface that substantially abuts, at least in regions, at least one inner or outer surface of a wall of a tube of the tube bundle and/or at least one inner surface of an edge of an opening in the tube base.

7. The heat exchanger according to claim 6, **characterized in that** the at least one flow guide surface is curved, at least in the region of an edge, toward the at least one inner or outer surface of a tube wall and/or toward the at least one inner surface of an opening edge.

8. The heat exchanger according to one of the claims 1 through 7, **characterized in that** the at least one stabilizing element (12), in terms of its essential components, has a diad axis of rotational symmetry, the rotational axis of symmetry extending parallel to a longitudinal axis of a tube of the tube bundle.

9. The heat exchanger according to one of the claims 1 through 8, **characterized in that** the at least one stabilizing element (12) is connected to at least one adjacent stabilizing element via at least one connecting element.

10. The heat exchanger according to claim 9, **characterized in that** the at least one connecting element (18) is disposed in the region of a side wall of the housing cover.

11. The heat exchanger according to claim 9 or 10, **characterized in that** the at least one connecting element (18) is resilient in at least one expansion direction due to its material and/or its shape.

12. The heat exchanger according to one of the claims 9 through 11, **characterized in that** the at least one connecting element (18) is designed as a single piece with at least one stabilizing element.

13. The heat exchanger according to one of the claims 9 through 12, **characterized in that** the connecting element (18) has substantially smaller dimensions than does the stabilizing element.

14. The heat exchanger according to one of the claims 1 through 13, **characterized in that** the housing cover includes at least one reinforcing rib (9), at least in the region of one side wall, wherein at least one first receptacle is disposed in the region of the at least one reinforcing rib.

15. The heat exchanger according to one of the claims 1 through 14, **characterized in that** at least one side wall of the housing cover has a thickness M, with M > 4 mm, in an edge region facing the tube base, such as the wall base.

16. The heat exchanger according to one of the claims 1 through 15, **characterized in that** a wall base of at least one side wall of the housing cover has a height L, with L > 4 mm.

## Revendications

1. Echangeur de chaleur, en particulier refroidisseur d'air de suralimentation pour un véhicule automobile, comprenant au moins un caisson (32) qui présente au moins une chambre (2) servant à la répartition et/ou à l'accumulation d'un milieu en circulation, et au moins un faisceau de tubes (35) qui se compose de tubes (34) qui sont reliés en communiquant avec la chambre (2) au moins au nombre de un, où le caisson (1) au moins au nombre de un présente un plateau à tubes (38) comportant des ouvertures (39) dans lesquelles peuvent être introduits les tubes (34) du faisceau de tubes (35), un couvercle de carter (1) comportant au moins deux parois latérales (3, 4), et au moins un élément de stabilisation (12) reliant les parois latérales au moins au nombre de deux, **caractérisé en ce qu'**au moins une paroi latérale présente au moins un premier logement (5, 10), et l'élément de stabilisation (12) au moins au nombre de un présente au moins un premier élément de transmission de force (13) qui peut être logé, par complémentarité de forme, dans le premier logement (5, 10), au moins au nombre de un, de la paroi latérale au moins au nombre de un,
et le plateau à tubes (38) du caisson (32) au moins au nombre de un présente au moins un deuxième logement, et l'élément de stabilisation (12) au moins au nombre de un présente au moins un deuxième élément de transmission de force (14) qui s'engage dans le deuxième logement au moins au nombre de un.

2. Echangeur de chaleur selon la revendication 1, **caractérisé en ce que** le premier élément de transmission de force (13) au moins au nombre de un est configuré en formant une seule et même pièce avec le deuxième élément de transmission de force (14) au moins au nombre de un.

3. Echangeur de chaleur selon la revendication 1 ou 2, **caractérisé en ce que** l'élément de stabilisation (12) au moins au nombre de un présente au moins un élément d'absorption de force qui est disposé sensiblement entre deux ouvertures adjacentes du plateau à tubes.

4. Echangeur de chaleur selon la revendication 3, **caractérisé en ce que** l'élément d'absorption de force (15) est configuré de façon élastique comme un ressort.

5. Echangeur de chaleur selon la revendication 3 ou 4, **caractérisé en ce que** l'élément d'absorption de force (15) au moins au nombre de un est configuré en formant une seule et même pièce avec au moins un premier et / ou au moins un deuxième élément de transmission de force.

6. Echangeur de chaleur selon l'une quelconque des revendications 1 à 5, **caractérisé en ce que** l'élément de stabilisation (12) au moins au nombre de un présente au moins une surface déflectrice d'écoulement qui fait suite pratiquement, au moins partiellement, à au moins une surface intérieure ou extérieure d'une paroi d'un tube du faisceau de tubes et / ou à au moins une surface intérieure d'un bord d'une ouverture placée dans le plateau à tubes.

7. Echangeur de chaleur selon la revendication 6, **caractérisé en ce que** la surface déflectrice d'écoulement au moins au nombre de un est courbée au moins dans la zone d'un bord, en direction de la surface intérieure ou extérieure, au moins au nombre de un, d'une paroi tubulaire et / ou en direction de la surface intérieure, au moins au nombre de un, d'un bord d'ouverture.

8. Echangeur de chaleur selon l'une quelconque des revendications 1 à 7, **caractérisé en ce que** l'élément de stabilisation (12) au moins au nombre de un présente, par rapport à ses composants essentiels, un axe de rotation à symétrie de degré deux, où l'axe de symétrie de rotation est parallèle à un axe longitudinal d'un tube du faisceau de tubes.

9. Echangeur de chaleur selon l'une quelconque des revendications 1 à 8, **caractérisé en ce qu'**au moins un élément de stabilisation (12) est relié, par au moins un élément d'assemblage, à au moins un élément de stabilisation voisin.

10. Echangeur de chaleur selon la revendication 9, **caractérisé en ce que** l'élément d'assemblage (18) au moins au nombre de un est disposé dans la zone d'une paroi latérale du couvercle de carter.

11. Echangeur de chaleur selon la revendication 9 ou 10, **caractérisé en ce que** l'élément d'assemblage (18) au moins au nombre de un, dans au moins une direction de dilatation, est configuré de façon élastique comme un ressort, par sa matière et / ou sa forme.

12. Echangeur de chaleur selon l'une quelconque des revendications 9 à 11, **caractérisé en ce que** l'élément d'assemblage (18) au moins au nombre de un est configuré en formant une seule et même pièce avec au moins un élément de stabilisation.

13. Echangeur de chaleur selon l'une quelconque des revendications 9 à 12, **caractérisé en ce que** l'élément d'assemblage (18) présente des dimensions bien inférieures à celles de l'élément de stabilisation.

14. Echangeur de chaleur selon l'une quelconque des revendications 1 à 13, **caractérisé en ce que** le couvercle de carter, au moins dans la zone d'une paroi latérale, présente au moins une nervure de renfort (9), où au moins un premier logement est disposé dans la zone de la nervure de renfort au moins au nombre de un.

15. Echangeur de chaleur selon l'une quelconque des revendications 1 à 14, **caractérisé en ce qu'**au moins une paroi latérale du couvercle de carter présente dans une zone de bordure, telle que le pied de la paroi, tournée vers le plateau à tubes, une épaisseur M où M > 4 mm.

16. Echangeur de chaleur selon l'une quelconque des revendications 1 à 15, **caractérisé en ce qu'**un pied de paroi d'au moins une paroi latérale du couvercle de carter présente une hauteur L où L > 4 mm.
